# EUROPÄISCHE PATENTSCHRIFT

(11) **EP 0 663 559 B1**
(45) Veröffentlichungstag und Bekanntmachung des Hinweises auf die Patenterteilung: **30.09.1998**
(21) Anmeldenummer: 94119361.7
(22) Anmeldetag: 08.12.1994
(51) Int. Cl.: F16L 47/02

(54) **Elektrisch schweissbares Formteil aus Kunststoff**
Electrically weldable element made of plastic
Elément soudable par électricité en matière plastique

(30) Priorität: 10.01.1994 CH 57/94
(43) Veröffentlichungstag der Anmeldung: 19.07.1995
(73) Patentinhaber: Georg Fischer Rohrleitungssysteme AG, CH-8201 Schaffhausen (CH)
(72) Erfinder: Porfido, Erasmo, CH-8200 Schaffhausen (CH); Bamberger, Michael, D-78262 Gailingen (DE)
(74) Vertreter: Rottmann, Maximilian R.

(56) Entgegenhaltungen:
- EP-A- 0 258 827
- EP-A- 0 278 553

## Beschreibung

Die Erfindung betrifft ein elektrisch schweissbares Formteil aus Kunststoff, wie es im Oberbegriff von Anspruch 1 gekennzeichnet ist.

Formteile der eingangs genannten Art sind bekannt. Die EP-A-0525339 zeigt derartige als Schweissmuffen ausgebildete Formteile, wobei diese mit einem Heizelement oder mit zwei Heizelementen ausgebildet sein können.

Weitere unterschiedliche Formteile aus Kunststoff für Schweissverbindungen sind z.B. T-Fittings mit drei Heizelementen, Kreuz-Fittings mit vier Heizelementen oder Anbohr- bzw. Abzweig-Schellen mit einer Heizmatte.

Für jedes dieser unterschiedlichen Formteile ist ein anderes Schweissprogramm für die Zuführung der elektrischen Heizleistung erforderlich. Bei einem bekannten Schweissgerät, welches für die Zuführung der Schweissenergie erforderlich ist (siehe Prospekt der Georg Fischer Rohrleitungssysteme AG, Nr. Fi 1788/1 vom April 1993) sind derartige Schweissprogramme im Gerät gespeichert, wobei jedes Programm erst durch ein für jede Formteilart unterschiedliches Verbindungskabel aktiviert wird.

Für jede Formteilart ist somit ein eigenes kodiertes Verbindungskabel erforderlich, was sehr nachteilig ist.

Eine elektrisch schweissbare Kunststoffmuffe ist aus GB 2137036 bekannt geworden, die einen kodierten Widerstand aufweist und eine Steckverbindung für die gleichzeitige Herstellung einer Stark- und Schwachstromverbindung verwendet.

Eine weitere Schweissmuffe ist in der WO-A-9426502 beschrieben, die einen vollständig bi-direktionalen Datenaustausch zwischen der Elektroschweissmuffe und einem Speisegerät ermöglicht.

Aufgabe der vorliegenden Erfindung ist es, eine gegenüber dem bekannten Stand der Technik sehr einfache Lösung zur automatischen Handhabung von verschiedenen Formteilen mit verschiedenen Schweissprogrammen vorzuschlagen.

Diese Aufgabe wird durch den kennzeichnenden Teil von Anspruch 1 gelöst. Die Schweissprogramme sind einzig von der Anzahl der vorhandenen Heizelemente abhängig und es werden keine komplizierten Bauteile zum Kodieren und zum Ablesen der kodierten Werte notwendig. Da nur ohm'sche Widerstandswerte Verwendung finden, können diese einfach und präzis abgelesen und zur Bestimmung der Schweissleistung herangezogen werden.

Besonders vorteilhafte Ausbildungen der Erfindung sind in den abhängigen Ansprüchen gekennzeichnet.

Die Erfindung ist in den beiliegenden Zeichnungen beispielsweise dargestellt und nachfolgend beschrieben. Es zeigen:
- Fig. 1: einen Teillängschnitt eines als Schweissmuffe ausgebildeten Formteils mit zwei Heizelementen
- Fig. 2: eine Teildraufsicht in Richtung A von Fig. 1
- Fig. 3: eine Ausführungsvariante von Fig. 1 mit einem Heizelement
- Fig. 4: eine Frontansicht einer wie in den Fig. 1 bis 3 dargestellten, in das Formteil eingesteckten Platte in vergrösserter Darstellung
- Fig. 5: eine Seitenansicht von Fig. 4 und
- Fig. 6: eine Ausführungsvariante der in Fig. 4 dargestellten Platte.

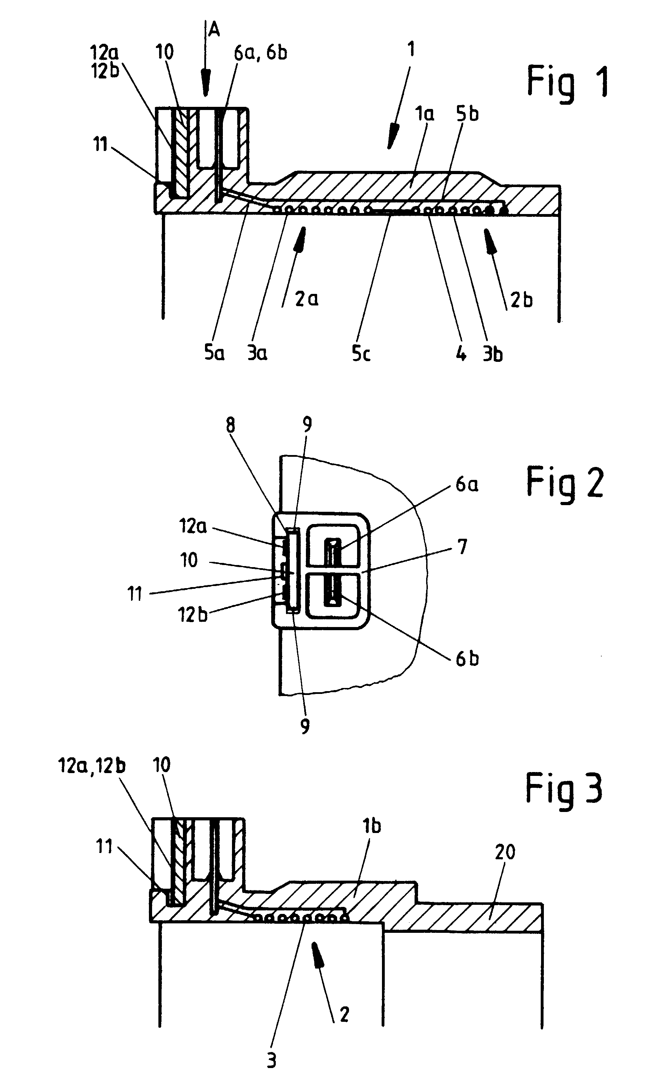

Das in den Fig. 1 und 2 dargestellte, als Schweissmuffe 1a ausgebildete Formteil 1 aus einem schweissbaren Kunststoff weist für jedes zu verbindende Rohr eine muffenförmige Schweiss-Partie 2a, 2b auf, an deren Innenumfang jeweils ein Heizelement 3a, 3b angeordnet ist, welches aus einem spiralförmig gewundenen Widerstandsdraht 4 besteht.

Das vordere Ende des Heizelementes 3a ist mittels eines Verbindungsleiters 5a mit einem Steckkontakt 6a und das hintere Ende des Heizelementes 3b mittels eines Verbindungsleiters 5b mit einem Steckkontakt 6b verbunden, wobei die beiden Heizelemente 3a, 3b mit axialer Distanz zueinander angeordnet und mit einem Verbindungsleiter 5c miteinander verbunden sind. Wie aus Fig. 2 ersichtlich, sind die beiden Steckkontakte 6a, 6b umfangsmässig nebeneinander und von einer Wand 7 umgeben geschützt am Formteil 1 angeordnet.

Die mit dem Formteil verbundene Wand 7 weist eine mit Führungsnuten 9 versehene Ausnehmung 8 auf, in welcher eine vorzugsweise aus Kunststoff bestehende Platte 10 einsteckbar angeordnet ist.

Die Platte 10 ist mit einem Widerstand 11 und mit Anschlüssen 12a, 12b für eine Verbindung mit einem Schweissgerät versehen. Der Widerstand weist einen bestimmten ohm'schen Widerstandswert auf, durch welchen das Formteil als Schweissmuffe mit zwei Heizelementen 3a, 3b identifizierbar ist, was durch eine Messung im Schweissgerät nach dem Anschliessen des Kabels erfolgt.

Die Fig. 3 zeigt eine Schweissmuffe 1b mit nur einer, ein Heizelement 3 aufweisenden Schweisspartie 2 und einem zylindrischen Rohrstück 20 zum 3eispiel für eine Muffen-Schweissverbindung oder eine Klemm-Schraubverbindung zum Verbinden mit anderen Formteilen oder Rohren. Dieses Formteil ist ebenfalls mit einer Platte 10 mit einem Widerstand 11 versehen, dessen ohm'scher Widerstandwert dieses Formteil als Schweissmuffe 1b mit einem Heizelement 3 identifiziert.

Das Formteil kann auch als Bogen mit einem oder zwei Heizelementen als T-Stück mit drei Heizelementen oder als Kreuz-Stück mit vier Heizelementen ausgebildet sein, wobei jeweils eine andere Platte 10 mit einem anderen Widerstand angeordnet ist, dessen ohm'scher Widerstandswert entsprechend der Art des Formteils bzw. der Anzahl Heizelemente festgelegt ist.

Auch kann das Formteil als ein auf das Rohr aufsetzbares Teil mit einem Sattelteil und Abzweigstutzen wie z.B. als eine Anbohrschelle oder eine Abzweigschelle ausgebildet sein, wobei dann das Heizelement eine, den Rohrumfang mindestens teilweise umgreifende Heizmatte ist. Der aufsteckbare Widerstand identifiziert dann das Formteil mit einer Heizmatte.

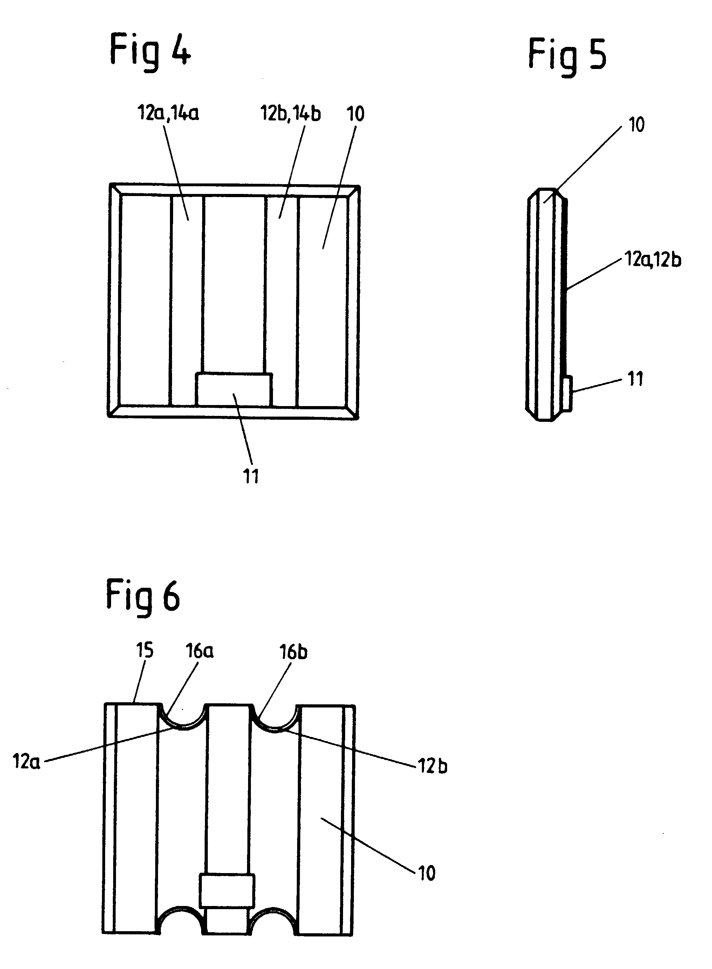

Die Fig. 4 und 5 zeigen die Platte 10 mit dem auf einer Plattenfläche angeordneten Widerstand 11 und den Anschlüssen 12a, 12b, wobei der Widerstand 11 und die Anschlüsse 12a, 12b miteinander verbunden sind. Es besteht die Möglichkeit, dass der Widerstand 11 auf einer Plattenfläche und die Anschlüsse 12a, 12b auf der anderen Plattenfläche angeordnet sind und mit durch die Platte 10 gesteckte Leiter miteinander verbunden sind.

Die Anschlüsse 12a, 12b sind als zwei auf der Platte 10 zueinander parallel angeordnete ebene Kontaktflächen 14a, 14b ausgebildet, welche vorzugsweise aus einem metallischen Blech bestehen.

Eine Ausführungsvariante der Platte 10 zeigt Fig. 5, bei welcher die Anschlüsse 12a, 12b mindestens an einer Umfangsseite 15 der Platte 10 im bogenförmigen Ausnehmungen 16a, 16b angeordnet sind, welche mit den metallischen Kontaktflächen versehen sind.

Entsprechend ausgebildete Stecker des Anschlusskabels werden dann gegen die Kontaktflächen in die Ausnehmungen gedrückt.

## Patentansprüche

1. Elektrisch schweissbares Formteil (1) aus Kunststoff mit mindestens einer, ein Heizelement (3,3a,3b) aus einem Widerstandsdraht (4) aufweisenden Schweisspartie (2,2a,2b) zur Herstellung einer Schweissverbindung mit mindestens einem weiteren Kunststoffteil, wie z.B, einem Rohrleitungsteil, wobei die Enden des oder der Heizelemente mit Steckkontakten (6a,6b) für die Stromzuführung von einem Schweissgerät verbunden sind, wobei zur Identifizierung des Formteils (1) der ohm'sche Widertandswert eines, im Bereich der Steckkontakte (6a,6b) angeordneten Widerstandes (11) dient, dadurch gekennzeichnet, dass der Widerstand (11) von einer Einsteckplatte (10) getragen ist, und dass der Widerstandswert der Anzahl der in der Schweisspartie (2,2a,2b) vorhandenen Heizelementen (3,3a,3b) entspricht und damit die erforderliche Schweissleistung anzeigt, wobei der Widerstandswert an, in die Einsteckplatte (10) eingelassenen Anschlüssen (12a,12b) durch das Schweissgerät, beim Anschliessen desselben, messbar ist.

2. Formteil nach Anspruch 1, dadurch gekennzeichnet, dass der Widerstand (11) und die Anschlüsse (12a, 12b) an einer Seite der Einsteckplatte (10) angeordnet sind.

3. Formteil nach Anspruch 1, dadurch gekennzeichnet, dass der Widerstand (11) auf einer Plattenfläche und die Anschlüsse (12a, 12b) an der anderen Plattenfläche angeordnet und mit durch die Platte (10) gesteckten Leitungen miteinander verbunden sind.

4. Formteil nach einem der Ansprüche 1 bis 3, dadurch gekennzeichnet, dass die Platte (10) in eine mit Führungnuten (9) versehene Ausnehmung (8) des Formteils (1) zwischen die Führungsnuten einschiebbar ist.

5. Formteil nach einem der Ansprüche 1 bis 4, dadurch gekennzeichnet, dass die Anschlüsse (12a, 12b) als parallel zueinander verlaufende ebene Kontaktflächen (14a,14b) ausgebildet sind.

6. Formteil nach einem der Ansprüche 1 bis 5, dadurch gekennzeichnet, dass die Anschlüsse (12a, 12b) an mindestens einer Umfangsseite (15) der Platte (10) in bogenförmigen Ausnehmungen (16a, 16b) angeordnet sind.

## Claims

1. Electrically weldable element (1) made of plastic with at least one member to be welded (2, 2a, 2b), having a heating element (3, 3a, 3b) comprising a resistance wire (4), for producing a welded joint with a least one other plastic element, such as for example a pipeline element, the ends of the heating element or elements being connected to plug-in contacts (6a, 6b) for supplying power from a welding appliance, the ohmic resistance value of a resistance (11) arranged in the region of the plug-in contacts (6a, 6b) serving for identification of the element (1), characterized in that the resistance (11) is carried by an insert plate (10), and in that the resistance value corresponds to the number of heating elements (3, 3a, 3b) present in the member to be welded (2, 2a, 2b) and consequently indicates the required welding power, the resistance value at terminals (12a, 12b) recessed into the insert plate (10) being measurable by the welding appliance, when the latter is connected.

2. Element according to Claim 1, characterized in that the resistance (11) and the terminals (12a, 12b) are arranged on one side of the insert plate (10).

3. Element according to Claim 1, characterized in that the resistance (11) is arranged on one surface of the plate and the terminals (12a, 12b) are arranged on the other surface of the plate and the said resistance and the said terminals are connected to one another by leads inserted through the plate (10).

4. Element according to one of Claims 1 to 3, characterized in that the plate (10) can be pushed into a recess (8) of the element (1) provided with guiding grooves (9), between the guiding grooves.

5. Element according to one of Claims 1 to 4, characterized in that the terminals (12a, 12b) are designed as planar contact surfaces (14a, 14b) running parallel to one another.

6. Element according to one of Claims 1 to 5, characterized in that the terminals (12a, 12b) are arranged on at least one peripheral side (15) of the plate (10) in arcuate recesses (16a, 16b).

## Revendications

1. Pièce moulée (1) soudable électriquement en plastique avec au moins une partie soudable (2, 2a, 2b) présentant un élément chauffant (3, 3a, 3b) formé d'un fil de résistance (4) pour la fabrication d'un assemblage soudé avec au moins une autre partie plastique, par exemple une partie de conduite, les extrémités de l'élément ou des éléments de chauffage étant reliées aux contacts à fiches (6a, 6b) pour l'arrivée de courant d'un appareil de soudage, la résistance ohmique d'une résistance (11) disposée dans la zone des contacts à fiches (6a, 6b) servant à l'identification de la pièce moulée (1), caractérisée en ce que la résistance (11) est portée par une plaque enfichable (10), et en ce que la valeur de résistance correspond au nombre des éléments chauffants (3, 3a, 3b) présents dans la partie soudable (2, 2a, 2b) et indique ainsi la puissance de soudage indispensable, la valeur de résistance sur les branchements (12a, 12b) introduits dans la plaque enfichable (10) pouvant être mesurée par l'appareil de soudage, lors du raccordement de celui-ci.

2. Pièce moulée selon la revendication 1, caractérisée en ce que la résistance (11) et les branchements (12a, 12b) sont disposés sur un côté de la plaque enfichable (10).

3. Pièce moulée selon la revendication 1, caractérisée en ce que la résistance (11) et les branchements (12a, 12b) sont disposés respectivement sur une surface de plaque et sur l'autre surface de plaque et sont reliés entre eux avec des lignes fixées par la plaque (10).

4. Pièce moulée selon l'une quelconque des revendications 1 à 3, caractérisée en ce que la plaque (10) peut être introduite dans une cavité (8), pourvue de rainures de guidage (9), de la pièce moulée entre les rainures de guidage.

5. Pièce moulée selon l'une quelconque des revendications 1 à 4, caractérisée en ce que les branchements (12a, 12b) sont conçus comme des surfaces de contact (14, 14b) planes et parallèles entre elles.

6. Pièce moulée selon l'une quelconque des revendications 1 à 5, caractérisée en ce que les branchements (12a, 12b) sont disposés sur au moins un côté périphérique (15) de la plaque dans des cavités (16a, 16b) de forme cintrée.
